# EUROPEAN PATENT APPLICATION

(11) **EP 3 848 745 A1**
(43) Date of publication of application: **14.07.2021**
(21) Application number: 21150479.0
(22) Date of filing: 07.01.2021
(51) Int. Cl.: G02B 27/00

(54) **LIGHT GUIDE IMAGE PROCESSING METHOD AND APPARATUS**

(30) Priority: 07.01.2020 TW 109100501
(71) Applicant: Pegatron Corporation, Taipei City 112 (TW)
(72) Inventor: Hsia, Hsi-Sheng, 112 Taipei City (TW)
(74) Representative: Hermann, Felix

(57) **Abstract**

A light guide image processing method and apparatus, the including: performing an optical simulation operation on a light guide design module to generate a first image corresponding to the light guide design module; generating a luminance analysis diagram corresponding to the first image according to a luminance analysis instruction; generating a second image according to the luminance analysis diagram and a plurality of optical parameters; recognizing whether the second image has image defects; and if the image defects exist, correcting the light guide design module according to the second image.

## Description

### BACKGROUND

### Technical Field

The present disclosure relates to an image processing method and apparatus, and in particular, to a light guide image processing method and apparatus.

### Description of Related Art

As smart appliances and electronic sport products have risen in recent years, the need for visual effects grows dramatically, and how to better test the design of the light guide effectively is increasingly important.

Traditionally, after the design of the light guide is analyzed preliminarily through simulation by using optical simulation software, defects of a real object are confirmed based on an actually manufactured model. Finally, before mass production, reconfirmation is carried out by using a mold. In the prior art, generally, after light guides are designed and drawn, analysis results outputted by the optical simulation software are all based on an illuminance analysis. Thus, differences usually exist between the designed light guides and actual products. The differences or the defects in design cannot be found until subsequent manufacture of an actual model, causing an increase in time and costs of overall design and testing.

### SUMMARY

In order to solve the foregoing problems, some embodiments of the present disclosure provide a light guide image processing method, including: performing an optical simulation operation on a light guide design module, to generate a first image corresponding to the light guide design module; generating a luminance analysis diagram corresponding to the first image according to a luminance analysis instruction; generating a second image according to the luminance analysis diagram and a plurality of optical parameters; recognizing whether the second image has image defects; and if the image defects exist, correcting the light guide design module according to the second image.

Other embodiments of the present disclosure provide a light guide image processing apparatus, including: a memory and a processor. The memory is configured to store a light guide design module, a luminance analysis instruction and a plurality of optical parameters. The processor is coupled to the memory and configured to: accessing the light guide design module in the memory and generating a first image corresponding to the light guide design module; executing the luminance analysis instruction on the first image to generate a luminance analysis diagram; generating a second image according to the luminance analysis diagram and the plurality of optical parameters in the memory; recognizing whether the second image has image defects; and if the image defects exist, correcting the light guide design module according to the second image.

By using the foregoing light guide image processing method, time and costs of overall design and testing of a light guide can be decreased effectively. As described above, the device in some embodiments of the present disclosure can provide a fixed amplified gain at different operating temperatures.

### BRIEF DESCRIPTION OF THE DRAWINGS

To make the foregoing and other objectives, features, advantages, and embodiments of the present disclosure more obvious and comprehensible, the accompanying drawings are described as follows:
FIG. 1 is a schematic diagram of an image processing apparatus according to some embodiments of the present disclosure.
FIG. 2 is a flowchart of a light guide image processing method according to some embodiments of the present disclosure.
FIG. 3 is a schematic diagram of light guide images according to some embodiments of the present disclosure.

### DETAILED DESCRIPTION

The following describes the embodiments in detail with reference to the accompanying drawings. In addition, the drawings are only illustrative, but are not shown according to original sizes. To facilitate comprehension, same components in the following description are illustrated with the same symbol.

" First", "second" and the like used in the present disclosure do not specifically mean an order or a sequence, and are not used for limiting the present disclosure, but are used for distinguishing between components or operation described with the same technical term.

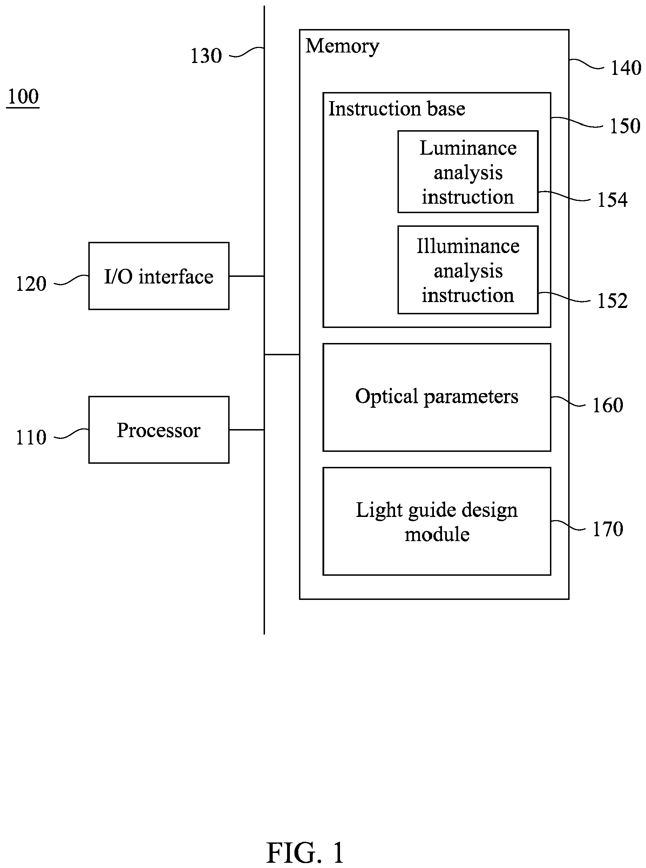

FIG. 1 is a schematic diagram of an image processing apparatus 100 according to some embodiments of the present disclosure. The image processing apparatus 100 includes a processor 110, an input/output interface (I/O interface) 120, a bus 130 and a memory 140. The processor 110, the I/O interface 120 and the memory 140 may be coupled to each other communicatively through the bus 130, thereby cooperating with each other. For example, the processor 110 may read and execute a program or an instruction stored in the memory 140 through the bus 130. In addition, the I/O interface 120 may be configured as a data or instruction input and/or output interface, so that one or more external input/output apparatuses (for example, a mouse, a keyboard, and a touch screen) send or receive an instruction through the bus 130.

In some embodiments, the processor 110 may be implemented by a central processing unit (CPU), a micro-processing unit (MCU) or other suitable processors.

In some embodiments, the bus 130 may be one or more of several bus architectures of any kind. Such bus architectures include a memory bus or a memory controller, a peripheral bus, a video bus or other suitable buses.

In some embodiments, the memory 140 may include a system memory of any kind, for example, a static random access memory (SRAM), a dynamic random access memory (DRAM), or a read-only memory (ROM).

In some embodiments, the processor 140 is configured to store an instruction base 150, optical parameters 160 and a light guide design module 170. The instruction base 150 includes multiple sets of optical simulation analysis instructions, and in some embodiments, the instruction base 150 includes an illuminance analysis instruction 152 and a luminance analysis instruction 154. In some embodiments, the image processing apparatus 100 storing the luminance analysis instruction 154 includes program software TracePro, so that the processor 110 executes the luminance analysis instruction 154 to generate a corresponding luminance analysis diagram. However, the present disclosure is not limited to the program software. The optical parameters 160 include brightness, contrast and a gamma value, contrast, brightness, chroma, a compensation value and the like.

During operation, the processor 110 may read the memory 140 through the bus 130 and execute the illuminance analysis instruction 152 and the luminance analysis instruction 154, to perform a corresponding operation or corresponding processing. In addition, because the memory 140 stores the optical parameters 160, a user may input or adjust the optical parameters by using the I/O interface 120.

In some embodiments, the light guide design module 170 may be pre-stored in the memory 140, or may be imported or inputted into the memory 140 for storage through the I/O interface 120 and the bus 130 during the operation. In some embodiments, the light guide design module 170 includes a three-dimensional module drawn in engineering drawing, such as, AutoCAD and Pro/ENGINEER. In other embodiments, the light guide design module is designed according to a shape and an internal structure of industrial design of a product. Features or parameters of a shape, a cross-sectional area, a bending angle and texture of the corresponding light guide may affect completeness of the light guide design module.

An embodiment of the image processing apparatus 100 may include other components. For example, the image processing apparatus 100 may include a power supply, a cable, a mother board, a removable storage medium, a housing and the like. Although not shown, the other components may also be regarded as a part of the image processing apparatus 100.

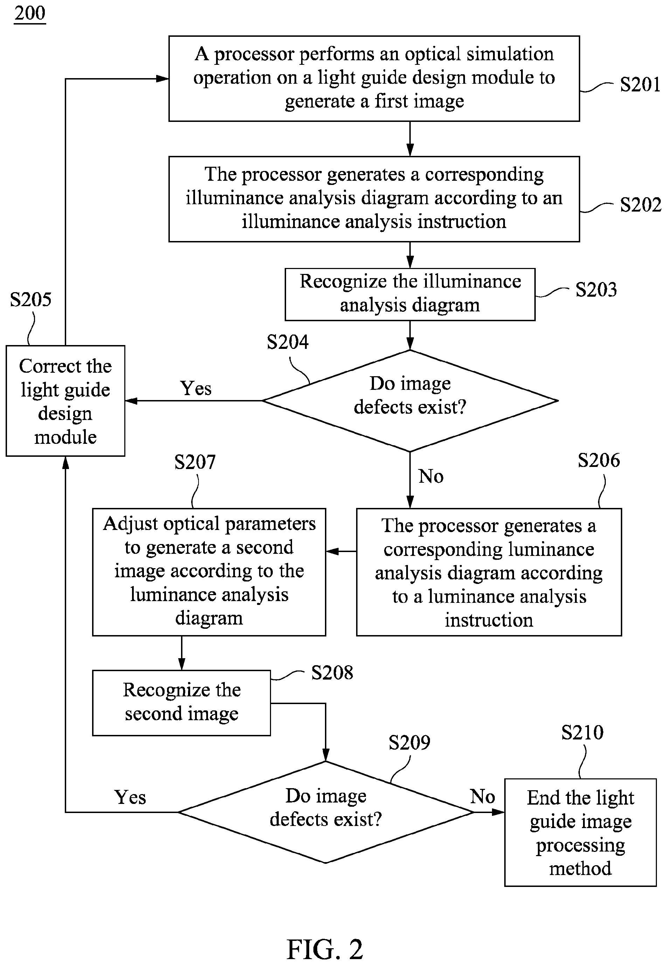

FIG. 2 is a flowchart of a light guide image processing method 200 according to some embodiments of the present disclosure. As shown in FIG. 2, the processing method 200 includes step S201, step S202, step S203, step S204, step S205, step S206, step S207, step S208, step S209 and step S210. In the following, to facilitate the description and make the description comprehensible, the processing method 200 shown in FIG. 2 is described with reference to FIG. 1, but is not limited herein.

Referring to FIG. 2, a processor 110 performs an optical simulation operation on a light guide design module 170 to generate a first image (step S201). In some embodiments, before step S201, the processor 110 may access the light guide design module 170 in the memory 140 through a bus 130. In some embodiments, a user may adjust the light guide design module 170 through an I/O interface 120, to adjust an observation plane of the light guide corresponding to the light guide design module 170, and the processor 110 performs an optical simulation operation on the light guide design module 170, to generate a first image corresponding to the light guide design module 170 on the observation plane.

Then, the processor 110 accesses an illuminance analysis instruction 152 stored in an instruction base 150 in the memory 140 through the bus 130, and generates an illuminance analysis diagram corresponding to the first image according to the illuminance analysis instruction 152 (step S202). The illuminance analysis diagram is a full color analysis diagram, and the user may choose to adjust the illuminance analysis diagram through the I/O interface 120, for example, adjusting a resolution, a color gradient, a coloring manner, uniformity or other parameters.

Then, the illuminance analysis diagram is recognized (step S203), and it is determined whether image defects exist in the illuminance analysis diagram (step S204). If the image defects exist, corresponding optical defects in the light guide design module 170 (step S205) are corrected according to the illuminance analysis diagram, and the processor 110 regenerates a corresponding first image according to the corrected light guide design module 170.

In some embodiments, the optical defects of the light guide design module 170 may be recognized through color distribution in the illuminance analysis diagram. For example, in the illuminance analysis diagram, if a color of a region is closer to red, it indicates that the region is brighter, and if a color of a region is closer to blue, it indicates that the region is darker. For example, the light guide design module 170 is provided with multiple positioning studs. An improper position arrangement of the positioning studs may cause uneven brightness distribution of the light guide that is finished subsequently, thereby causing a relatively bad visual effect. Therefore, the improper arrangement of the positions of the positioning studs may cause a region with a color close to blue in the illuminance analysis diagram.

Returning to step S204, if the image defects do not exist, the processor 110 accesses a luminance analysis instruction 154 stored in the instruction base 150 in the memory 140 through the bus 130, and performs an operation to generate a luminance analysis diagram corresponding to the first image according to the luminance analysis instruction 154 (step S206). For example, the user may set an observation angle and a field of view at the I/O interface 120, so that when executing the luminance analysis instruction 154, the processor 110 can perform operation processing to obtain a luminance value corresponding to each pixel in the field of view at the observation angle, and obtain the luminance analysis diagram by using the luminance value corresponding to each pixel. In different embodiments, the user may change the luminance value corresponding to each pixel by setting different observation angles, so that different luminance analysis diagrams are generated.

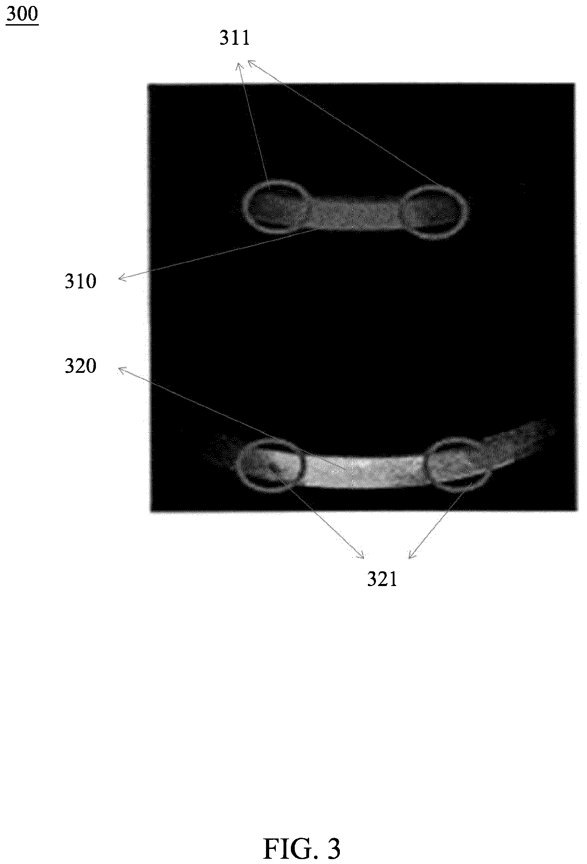

Referring to FIG. 2 and FIG. 3, FIG. 3 is a schematic diagram of a light guide image 300 according to some embodiments of the present disclosure. The processor 100 adjusts the optical parameters 160 to generate a second image 310 according to the generated luminance analysis diagram (step S207). In some embodiments, an objective of adjusting the optical parameters 160 by the processor 110 according to the luminance analysis diagram is to enlarge differences between luminance values of the pixels in the second image, to be closer to a state seen by naked eyes, and image defects in the second image 310 may be more obvious. For example, the optical parameters 160 may be, for example, a gamma value of 60, a contrast of 0.9, and a brightness of 0.9. However, the present disclosure is not limited thereto, and the optical parameters 160 may be set according to different circumstances and different products.

As shown in FIG. 3, in some embodiments, the second image 310 is generated by using a photorealistic rendering function in the TracePro software. For a scattering optical system, photorealistic rendering may offset the relatively low efficiency caused by the use of reverse tracing only in the luminance analysis diagram. Therefore, the second image 310 can better simulate an appearance of the actual light guide design module completely.

After step S207, the second image 310 is recognized (step S208) and it is determined whether image defects exist (step S209). If the image defects exist, step S205 is performed again to correct the corresponding optical defects in the light guide design module 170. For example, positions of the multiple studs in the light guide design module 170 are moved. As shown in FIG. 3, the second image 310 has the image defects, for example, multiple dark regions 311, where the dark regions 311 correspond to the optical defects of the light guide generated according to the light guide design module 170.

In some embodiments, the image defects in the second image 310 are recognized by the user. In different embodiments, the image defects in the corresponding images may be recognized by a related recognition apparatus (not shown).

In some embodiments, the processor 110 compares the illuminance analysis diagram with the second image 310, and recognizes the image defects in the second image 310 by determining a color trend in the image, where the image defects include the image dark regions caused by structural design defects of the light guide design module 170. For example, the processor 110 may first find out a part with a uniform color in the illuminance analysis diagram, and then, determines whether the color of the part is uniform in the second image 310; if yes, the processor 110 determines that the second image 310 does not have image defects; if not, the processor 110 determines that the second image 310 has image defects.

Returning to step S209, if the image defects do not exist, it is determined that the light guide design module 170 has no structural defects, and the light guide design module processing method 200 is ended (step S210).

In some embodiments, corresponding to the step 209 of determining whether image defects exist, the method 200 may further include a step of determining whether the image defects can be clearly recognized (that is, the image defects exist, but are too blurry). If the image defects cannot be recognized clearly, the optical parameters 160 are adjusted, and a third image 320 is generated by the processor 110 according to the luminance analysis diagram and the readjusted optical parameters 160. As shown in FIG. 3, the third image 320 also includes multiple dark regions 321. The dark regions 321 also correspond to the optical defects of the light guide generated according to the light guide design module 170, and the dark regions 321 are more obvious than the dark regions 311. Therefore, in some embodiments, if the image defects (for example: positions of the dark regions 311) existing in the corresponding image 310 cannot be recognized clearly, by using the rendering function of the photorealistic rendering in TracePro software, the brightness, the contrast or the gamma value of the second image 310 may be adjusted, to generate the third image 320, so that the dark regions 321 of the third image 320 are recognized more easily.

In some different embodiments, the related step S202, step S203 and step S204 of the illuminance analysis may be omitted. For example, after following step S201, the processor 110 performs an operation to generate the luminance analysis diagram corresponding to the first image according to the luminance analysis instruction 154 (step S206) and generates the second image 310 corresponding to the optical parameters 160 according to the optical parameters 160 (step S207).

Although the present disclosure has been disclosed above by using the implementations, the implementations are not used to limit the present disclosure. Any person skilled in the art may make various variations and modifications without departing from the spirit and scope of the present disclosure. Therefore, the protection scope of the present disclosure is defined by the appended claims.

## Claims

1. A light guide image processing method (200), **characterized by** comprising:
performing (S201) an optical simulation operation on a light guide design module (170) to generate a first image corresponding to the light guide design module (170);
executing (S206) a luminance analysis instruction (154) on the first image to generate a luminance analysis diagram;
generating (S207) a second image according to the luminance analysis diagram and a plurality of optical parameters (160);
recognizing (S209) whether the second image has image defects; and
if the image defects exist, correcting (S205) the light guide design module (170) according to the second image.

2. The light guide image processing method (200) according to claim 1, wherein the step of recognizing whether the second image has the image defects comprises:
recognizing a plurality of dark regions in the second image corresponding to optical defects of the light guide design module (170).

3. The light guide image processing method (200) according to any one of claims 1 to 2, before the step of executing the luminance analysis instruction (154) on the first image to generate the luminance analysis diagram, further comprising:
executing (S202) an illuminance analysis instruction (152) on the first image to generate an illuminance analysis diagram;
recognizing (S204) whether the illuminance analysis diagram has image defects; and
if the image defects exist, correcting (S205) the light guide design module according to the illuminance analysis diagram, and generating the first image corresponding to the corrected light guide design module (170).

4. The light guide image processing method (200) according to claim 3, wherein the step of recognizing whether the second image has the image defects further comprises:
comparing the second image with the illuminance analysis diagram; and
recognizing the image defects in the second image according to a color trend in the second image and a color trend in the illuminance analysis diagram.

5. The light guide image processing method (200) according to any one of claims 1 to 2, before the step of executing the luminance analysis instruction (154) on the first image to generate the luminance analysis diagram, further comprising:
executing (S202) an illuminance analysis instruction (152) on the first image to generate an illuminance analysis diagram;
recognizing (S204) whether the illuminance analysis diagram has image defects; and
if the illuminance analysis diagram does not have the image defects, processing the first image by using an image processing apparatus (100).

6. The light guide image processing method (200) according to any one of claims 1 to 5, further comprising:
when the image defects in the second image cannot be recognized, further adjusting the optical parameters (160);
generating a third image according to the luminance analysis diagram and the adjusted optical parameters (160); and
recognizing image defects in the third image.

7. The light guide image processing method (200) according to any one of claims 1 to 6, wherein the optical parameters (160) comprise brightness, contrast and a gamma value.

8. An image processing apparatus (100), **characterized by** comprising:
a memory (140), configured to store a light guide design module (170), a luminance analysis instruction (154) and a plurality of optical parameters (160); and
a processor (110), coupled to the memory (140) and configured to:
accessing the light guide design module (170) in the memory (140) and generating a first image corresponding to the light guide design module (170);
executing the luminance analysis instruction (154) on the first image to generate a luminance analysis diagram;
generating a second image according to the luminance analysis diagram and the plurality of optical parameters (160) in the memory (140);
recognizing whether the second image has image defects; and
if the image defects exist, correcting the light guide design module (170) according to the second image.

9. The image processing apparatus (100) according to claim 8, wherein the memory (140) further comprises an illuminance analysis instruction (152), and the processor (110) is further configured to:
executing the illuminance analysis instruction (152) on the first image to generate an illuminance analysis diagram;
recognizing whether the illuminance analysis diagram has image defects; and
if the image defects exist, correcting the light guide design module (170) according to the illuminance analysis diagram, and generating the first image corresponding to the corrected light guide design module (170).

10. The image processing apparatus (100) according to any one of claims 8 to 9, wherein the image processing apparatus (100) further comprises:
an input/output interface (120), configured to be operated to adjust the optical parameters (160) stored in the memory, wherein the optical parameters comprise brightness, contrast and a gamma value.
